(19) **Europäisches Patentamt / European Patent Office / Office européen des brevets**

(11) **EP 1 364 216 B1**

(12) # EUROPÄISCHE PATENTSCHRIFT

(45) Veröffentlichungstag und Bekanntmachung des Hinweises auf die Patenterteilung:
**07.11.2007 Patentblatt 2007/45**

(21) Anmeldenummer: **02726122.1**

(22) Anmeldetag: **01.03.2002**

(51) Int Cl.:
*G01P 7/00* (2006.01)  *G01P 15/00* (2006.01)
*G01P 15/11* (2006.01)  *B60R 21/01* (2006.01)

(86) Internationale Anmeldenummer:
**PCT/EP2002/002225**

(87) Internationale Veröffentlichungsnummer:
**WO 2002/071078 (12.09.2002 Gazette 2002/37)**

(54) **STOSSIMPULSSENSOR**

SHOCK PULSE SENSOR

DETECTEUR D'IMPULSIONS DE CHOC

(84) Benannte Vertragsstaaten:
**FR GB IT SE**

(30) Priorität: **01.03.2001 DE 10110737**
**09.04.2001 DE 10118491**

(43) Veröffentlichungstag der Anmeldung:
**26.11.2003 Patentblatt 2003/48**

(73) Patentinhaber: **Gebr. Schmidt Fabrik für Feinmechanik GmbH & Co. KG**
**78112 St. Georgen (DE)**

(72) Erfinder: **SONDERGELD, Manfred**
**78112 St. Georgen (DE)**

(74) Vertreter: **Witte, Alexander et al**
**Witte, Weller & Partner**
**Patentanwälte**
**Postfach 105462**
**70047 Stuttgart (DE)**

(56) Entgegenhaltungen:
**DE-C- 4 128 347      US-A- 3 483 759**

**Beschreibung**

Die Erfindung betrifft einen Stoßimpulssensor mit einem rohrförmigen Sensorgehäuse und einem Sensorelement, das unter Einwirkung eines in Axialrichtung ausgeübten, mindestens näherungsweise impulsförmigen Stoßes auf das Sensorgehäuse mit einer Geschwindigkeit entlang eines vorbestimmten Weges in Axialrichtung im Sensorgehäuse bewegbar ist, wobei das Sensorelement aus einem magnetischen Werkstoff besteht, wobei ferner eine Messspule als gehäusefestes Aufnahmeelement vorgesehen ist, und wobei das Sensorelement in der Messspule über seine durch den Stoß verursachte Bewegung auf magnetischem Wege eine vom Weg abhängige Messspannung erzeugt.

Ein Stoßimpulssensor der vorstehend genannten Art ist aus der DE 41 28 347 C1 bekannt.

Im Stand der Technik sind unterschiedliche Sensoren bekannt, die zum Zweck der Kollisionsfrüherkennung in der Verformungszone von Kraftfahrzeugen installiert sind. Mit diesen Sensoren soll eine der registrierten Kollisionsschwere angemessene Auslösung von Sicherheitseinrichtungen erreicht werden, beispielsweise von Gurtstraffer- und adaptiven mehrstufigen Airbagsystemen. Bei den bekannten Sensoren handelt es sich meist um vollelektronische Beschleunigungssensoren im vorderen Fahrzeugbereich. Diese Sensoren sind z.B. in der Kühleraufhängung, im Fahrwerk oder im Stoßfänger untergebracht. Sie werden in der Fachsprache als "Upfront-Sensoren" bezeichnet. Diese Sensoren geben ein der Kollision entsprechendes Ausgangssignal ab, das über ein Anschlusskabel an eine Zentralauswerteeinheit weitergeleitet wird.

In der Zentralauswerteeinheit wird das Ausgangssignal weiterverarbeitet. Dies geschieht üblicherweise mit Hilfe eines mathematischen Algorithmus, wonach das Signal über die Kollisionszeitspanne aufintegriert wird. Aus der sich daraus ergebenden Geschwindigkeitsänderung werden Auslösekriterien für die Sicherheitseinrichtungen abgeleitet.

Da in der Praxis Kollisionen von Kraftfahrzeugen unter höchst unterschiedlichen Randbedingungen auftreten, können die am Messort auftretenden Beschleunigungsspitzen auch sehr unterschiedliche Werte aufweisen. In der Praxis rechnet man mit einem Dynamikbereich von etwa 200:1 in einem Frequenzband von etwa 50 Hz bis 5.000 Hz. Andererseits kann der begrenzte Dynamikbereich herkömmlicher Sensoren zu Signalverzerrungen führen, die eine Verfälschung des erwähnten Zeitintegrals nach sich ziehen und die Sicherheitsauslösekriterien mit einer erhöhten und damit unerwünschten Unschärfe belasten.

Bei dem in der eingangs erwähnten DE 41 28 347 C1 beschriebenen Stoßimpulssensor handelt es sich nicht um einen Sensor der vorstehend genannten Art, bei dem aus einer physikalischen Größe (Beschleunigung, Verzögerung) ein analoges Messsignal abgeleitet wird. Vielmehr ist der bekannte Sensor von seiner Bauart her ein Sicherheitsschalter oder in der Fachsprache ein so genannter "Safing-Sensot". Der bekannte Sensor weist lediglich ein herkömmliches Feder-Masse-System auf, bei dem ein ringförmiger Magnet gegen die Kraft einer Druckfeder in einem Gleitrohr vetschiebbar ist und der ringförmige Magnet beim Vorbeilaufen an einem magnetisch betätigbaren elektrischen Schalter, beispielsweise einem Reed-Kontakt, ein Messsignal erzeugt, nämlich ein Schaltsignal, das beim Schließen bzw. Öffnen des Reed-Kontaktes erzeugt wird. Der verschiebbare Magnet ist mit einem seitlichen Zapfen in einer Nut geführt, die sich entlang der Bewegungsbahn des Magneten erstreckt und dazu geneigt verläuft. Aufgrund dessen wird dem Magneten bei seiner axialen Bewegung eine Drehbewegung überlagert. Die Form der Nut ist dabei so gewählt, dass der Magnet beim Vorlaufen bis in seine Endposition nur geringfügig, beim Zurücklaufen aber stark verzögert wird.

Diese Maßnahme hat den Sinn, die Schließdauer des Sicherheitsschalters in großem Maße unabhängig von dem Verlauf der Kollisionskurve zu machen und insgesamt längere Schließzeiten zu ermöglichen.

Der bekannte Sensor erzeugt somit kein analoges, zu einer Weiterverarbeitung fähiges Messsignal und gehört daher einer anderen Sensorgattung an, verglichen mit denjenigen, die eingangs genannt wurden.

Bei diesen bekannten Sensoren ist die Impulsgeschwindigkeit des bewegten Sensorelementes abhängig von der Amplitude und der Dauer des einwirkenden Stoßimpulses. Vergleicht man Messergebnisse mit Stoßimpulsen unterschiedlicher Höhe/Dauer, jedoch gleicher Impulsfläche, so ergibt sich, dass bei diesen Sensoren unterschiedliche Messsignale auftreten.

Der Erfindung liegt daher die Aufgabe zugrunde, einen Stoßimpulssensor der eingangs genannten Art dahingehend weiterzubilden, dass die vorstehend genannten Nachteile vermieden werden. Insbesondere soll ein Sensor-Ausgangssignal erzeugt werden, das ein unmittelbares Maß der Impulsgeschwindigkeit darstellt, also bei gleicher Impulsfläche unabhängig von der Dauer des einwirkenden Stoßimpulses ist.

Bei einem Stoßimpulssensor der eingangs genannten Art wird diese Aufgabe erfindungsgemäß dadurch gelöst, dass das Sensorelement in dem Sensorgehäuse entlang einer Innenwand geführt ist, dass in, der Innenwand eine Führungsnut angebracht ist, dass das Sensorelement mit einem in die Führungsnut fassenden Zapfen versehen ist, und dass die Führungsnut zum Weg um einen Winkel geneigt ist, der sich entlang des Weges ändert, wodurch die Geschwindigkeit des Sensorelementes derart verändert wird, dass die Messspannung über dem Weg bei gleicher Impulsfläche unabhängig von der Zeitdauer des impulsförmigen Stoßes ist.

Die der Erfindung zugrunde liegende Aufgabe wird auf diese Weise vollkommen gelöst.

Wenn nämlich das Sensorelement durch die Führung in seiner Geschwindigkeit so verändert, d.h. verzögert und/oder beschleunigt wird, so lässt sich die Abhängigkeit des Flussintegrals über dem Weg gerade kompensieren, mit der Folge, dass das Sensor-Ausgangssignal ein unmittelbares Maß der Impulsgeschwindigkeit darstellt und bei gleicher Impulsfläche von der Dauer des Stoßimpulses unabhängig ist.

Auf diese Weise lässt sich das ursprüngliche dynamische Kennfeld auf ein integrales Kennfeld reduzieren, dessen Dynamikbereich nur etwa 20:1 in einem Frequenzband von etwa 0 bis 200 Hz beträgt, so dass Signalverzerrungen weitgehend vermieden werden. Die erzielten Messergebnisse sind dabei im Messbereich auch eindeutig.

Dadurch, dass das Sensorelement in an sich bekannter Weise in dem Gehäuse entlang einer Innenwand geführt ist, wobei in der Innenwand eine Führungsnut angebracht und das Sensorelement mit einem in die Führungsnut fassenden Zapfen versehen ist und schließlich die Führungsnut zum Weg um einen Winkel geneigt ist, der sich entlang des Weges ändert, ergibt sich der Vorteil, dass die gewünschte Veränderung der Geschwindigkeit des Sensorelementes in konstruktiv einfacher und bewährter Weise erreicht werden kann.

Dies wird in bevorzugter Weiterbildung des Ausführungsbeispiels dadurch erreicht, dass die Innenwand eine zylindrische Wand ist, und dass der Winkel aus dem Gleichungssystem:

$$M_{(x)} = 1 + J / (mr^2 \cdot \tan^2 \alpha) \qquad \text{(I)}$$

$$M' / M_{(x)} = S(\Phi' / \Phi_{(x)}) \qquad \text{(II)}$$

bestimmt wird, wobei die verwendeten Größen bedeuten:

$\alpha$ = Neigungswinkel der Führungsnut entlang des Weges x,
r = der Radius der zylindrischen Innenwand,
x = der Weg des Sensorelementes,
m = die Masse des Sensorelements,
$M_{(x)}$ = die auf die Masse normierte effektive Masse,
$M'$ = dM/dx,
J = das Massenträgheitsmoment des Sensorelementes,
$\Phi_{(x)}$ = das magnetische Flussintegral,
$\Phi'$ = d$\Phi$/dx,
S = ein erster Variationsparameter, der im Bereich zwischen 0 und 2 variiert wird,
$M_{(0)}$ = ein zweiter Variationsparameter, der im Bereich zwischen 1 und 10 verliert wird,

wobei in der Differentialgleichung (II) die Variationsparameter (S, $M_0$) empirisch in den genannten Bereichen variiert werden, bis bei einer Berechnung des bewegten Sensorelementes die Messspannung ($U_M$) über dem Weg (x) bei gleicher Impulsfläche unabhängig von der Zeitdauer des impulsförmigen Stoßes ist.

Bei weiteren bevorzugten Ausführungsformen der Erfindung ist das Sensorelement ein Dauermagnet.

Diese Maßnahme hat den Vorteil, dass Messsignale in ausreichender Größe erhalten und damit auch störsicher weiterverarbeitet werden können.

Eine besonders gute Wirkung wird bei einem erfindungsgemäßen Stoßimpulssensor dadurch erzielt, dass in der Bewegungsbahn des Sensorelementes ein Rückstellmagnet angeordnet ist.

Diese Maßnahme hat den Vorteil, dass das Sensorelement nach dem Auslösen selbsttätig wieder in die Ausgangslage zurückkehren kann. Zum Vermeiden von Missverständnissen muss an dieser Stelle jedoch darauf hingewiesen werden, dass der Rückstellmagnet im Gegensatz zu Stoßimpulssensoren der eingangs genannten bekannten Art kein notwendiges Element des Systems ist, weil der erfindungsgemäße Stoßimpulssensor kein Feder-Masse-System beinhaltet. Der Rückstellmagnet kann beim erfindungsgemäßen Stoßimpulssensor auch entfallen, ohne dass dadurch die prinzipielle Funktionsfähigkeit in Frage gestellt wird. Bei einem Fehlen des Rückstellmagneten würde das Sensorelement lediglich in undefinierter Lage verbleiben, wenn der Stoßimpulssensor einmal angesprochen hat. Dies ist jedoch bei manchen Anwendungsfällen hinnehmbar, weil ein Ansprechen des Stoßimpulssensors ein Hinweis darauf ist, dass das Fahrzeug einen Kollisionsschaden erlitten hat, der einen Austausch des Stoßimpulssensors zwingend nach sich zieht.

Bei einer weiter bevorzugten Maßnahme, die alternativ oder zusätzlich zur vorgenannten Maßnahme angewendet werden kann, ist das Sensorelement in seiner Ruheposition mittels eines Halteelementes gehalten und löst sich erst bei Überschreiten einer vorbestimmten Abreißkraft vom Halteelement.

Diese Maßnahme hat den Vorteil, daß eine definierte Ausgangslage für das Sensorelement geschaffen wird und daß das Sensorelement gegebenenfalls auch nach einem Ansprechen wieder in seine Ausgangslage zurückkehren und dort vom Halteelement in einer Referenzposition eingefangen werden kann.

Vorzugsweise ist das Halteelement als weichmagnetische Platte ausgebildet, die das Sensorelement über einen vorbestimmten magnetischen Luftspalt in seiner Ruheposition mit einer definierten Rückhaltekraft festhält.

Weiterhin sind Ausführungsbeispiele der Erfindung besonders bevorzugt, bei denen in der Bewegungsbahn des Sensorelementes zwischen einer Ruheposition und dem Aufnahmeelement ein Test-Aufnahmeelement angeordnet ist. Dieses ist bevorzugterweise eine Testspule.

Diese Maßnahmen haben den Vorteil, daß ein Selbsttest des Stoßimpulssensors möglich ist, so daß zu gewissen Zeiten eine Überprüfung der Sicherheitseinrichtung des Kraftfahrzeuges möglich ist.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine Seitenansicht, im Schnitt, durch ein Ausführungsbeispiel eines Stoßimpulssensors nach dem Stand der Technik;

Fig. 2 ein Diagramm zur Erläuterung der Wirkungsweise und der im vorliegenden Zusammenhang interessierenden Nachteile des Stoßimpulssensors gemäß Fig. 1;

Fig. 3 ein Diagramm, darstellend das Flußintegral über den Weg bei dem bekannten Stoßimpulssensor gemäß Fig. 1;

Fig. 4 eine Darstellung, ähnlich Fig. 1, jedoch für ein Ausführungsbeispiel eines erfindungsgemäßen Stoßimpulssensors;

Fig. 5 ein Diagramm zur Erläuterung des Stoßimpulssensors gemäß Fig. 4;

Fig. 6 eine Darstellung, ähnlich Fig. 2, jedoch für den erfindungsgemäßen Stoßimpulssensor gemäß Fig. 4.

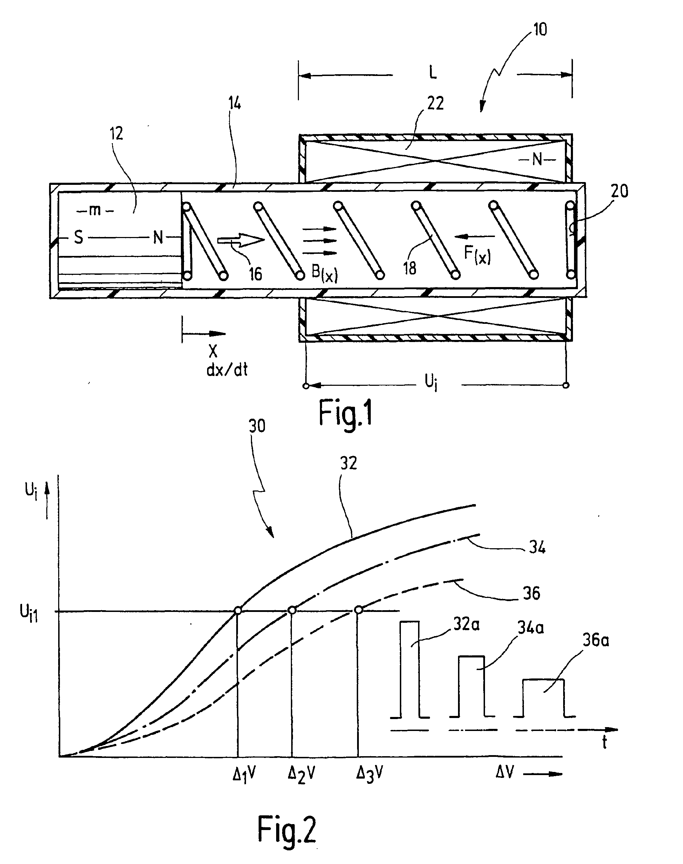

In Fig. 1 bezeichnet 10 insgesamt einen Stoßimpulssensor nach dem Stand der Technik. Der Stoßimpulssensor 10 weist einen Dauermagneten 12 auf, der axial magnetisiert ist. Der Dauermagnet 12 ist gleitend in einem rohrförmigen Sensorgehäuse 14 angeordnet. Wenn ein Stoß auf den Stoßimpulssensor 10 ausgeübt wird, bewegt sich der Dauermagnet 12 von der in Fig. 1 eingezeichneten Ruheposition nach rechts, wie mit einem Pfeil 16 angedeutet. Der Dauermagnet 12 ist in der Ruheposition mittels einer Feder 18 gehalten, die sich an einer dem Dauermagneten 12 gegenüberliegenden Wand 20 des Sensorgehäuses 14 abstützt. Das Sensorgehäuse 14 ist in dem in Fig. 1 rechten Bereich von einer Meßspule 22 umgeben.

Wenn auf den Stoßimpulssensor 10 ein in Axialrichtung wirkender Stoß ausgeübt wird, bewegt sich der Dauermagnet 12 im Sensorgehäuse 14 aufgrund des von außen einwirkenden Kraftstoßes mit einer Momentangeschwindigkeit $dx/dt$ in x-Richtung, und zwar gegen eine Rückstellkraft $F_{(x)}$. Die von dem Dauermagneten 12 ausgehende magnetische Induktion $B_x$ induziert in der Meßspule 22, die eine Windungszahl N und eine Windungslänge L aufweist, eine elektrische Spannung $U_i$, solange der Dauermagnet 12 in Bewegung ist. Nach Beendigung der äußeren Krafteinwirkung wird der Dauermagnet 12 mittels der einwirkenden Rückstellkraft $F_{(x)}$, die durch die Feder 18 aufgebracht wird, in seine Ruheposition $x = 0$ zurückkehren. Die in der Meßspule 22 erzeugte Induktionsspannung $U_i$ ist gegeben durch:

$$U_i \quad = \quad \frac{N}{L} \cdot \Phi_{(x)} dx \, / \, dt \qquad\qquad (1)$$

In dieser Formel steht $\Phi_{(x)}$ für das magnetische Flußintegral, das sich aus der Differenz des die Meßspule 22 durchflutenden magnetischen Flusses am Windungsanfang und am Windungsende der Meßspule 22 ergibt und ferner durch die Geometrie des Systems, bestehend aus dem Dauermagnet 12 und der Meßspule 22, bestimmt ist. Die Momentangeschwindigkeit $dx/dt$ kann aus der Bewegungsgleichung des Dauermagneten 12 berechnet werden und ergibt sich zu:

$$dx / dt = \Delta v - v_d; \quad v_d = \frac{1}{m} \int_0^{\Delta t} F(x) dt \qquad (2)$$

Der Ausdruck $\Delta v$ bezeichnet dabei die Impulsgeschwindigkeit, die im vorliegenden Zusammenhang die eigentliche Meßgröße ist.. Der Ausdruck $v_d$ ist der sogenannte Impulsverlust, der sich aus dem Stoßzeitintegral der Rückstellkraft $F_{(x)}$ über die Kollisionsdauer $\Delta t$ ableitet.

Die durch die Gleichungen (1) und (2) beschriebene Sensorcharakteristik $U_i = f_{(\Delta v)}$ ist durch das erste Diagramm 30 gemäß Fig. 2 dargestellt. Das erste Diagramm 30 umfaßt eine erste Kurve 32, die als durchgezogene Linie eine Meßkurve für einen Stoßimpuls darstellt, der in Fig. 2 in einer zeitabhängigen Darstellung mit 32a bezeichnet ist. Eine zweite Kurve 34 zeigt strichpunktiert den Verlauf für einen zweiten Stoßimpuls 34a, und eine dritte Kurve 36 zeigt gestrichelt den entsprechenden Verlauf für einen Stoßimpuls 36a. Die Stoßimpulse 32a, 34a und 36a haben dabei jeweils die gleiche Fläche (bei unterschiedlicher Beschleunigungsamplitude und Impulsdauer).

Man erkennt aus den Kurven 32, 34 und 36, daß diese eine stark ausgeprägte Abhängigkeit von der Dauer des Stoßimpulses 32a, 34a, 36a besitzen, so daß das Meßergebnis nicht neutral ist sondern vielmehr eine sogenannte "Dispersion" innerhalb der Kurven 32, 34 und 36 zu beobachten ist. Dies führt dazu, daß einer bestimmten Meßspannung $U_{i1}$ drei unterschiedliche Impulsgeschwindigkeiten $\Delta_1 v$, $\Delta_2 v$ und $\Delta_3 v$ zugeordnet werden können, je nachdem, wie lang der Stoßimpuls 32a, 34a, 36a dauerte.

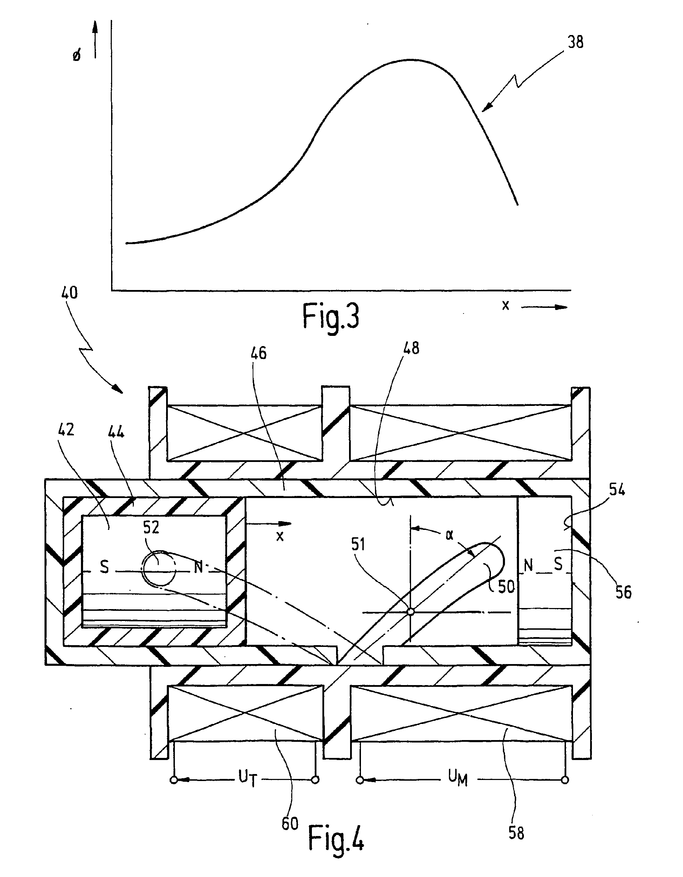

Die Ursache hierfür liegt darin, daß der Dauermagnet 12 gemäß Gleichung (2) den Impulsverlust $v_d$ erleidet und das magnetische Flußintegral $\Phi$ gemäß Gleichung (1) entlang des Verfahrweges x des Dauermagneten 12 nicht konstant ist. Dies ist in Fig. 3 in einem zweiten Diagramm 38 nochmals dargestellt. Die Nicht-Konstanz des magnetischen Flußintegrals $\Phi$ über dem Weg x ist bauartabhängig und unvermeidlich.

Andererseits sorgt der Impulsverlust $v_d$ für einen verkürzten Verfahrweg x im Vergleich zur Freiflugstrecke, d.h. ohne Rückstellkraft, so daß eine kompakte Baulänge des Stoßimpulssensors 10 möglich wird, ohne den verfügbaren Einbauraum im Kraftfahrzeug zu überschreiten.

Erfindungsgemäß soll nun die bestehende Wegabhängigkeit des magnetischen Flußintegrals $\Phi$ durch geeignete konstruktive Maßnahmen kompensiert werden, um auf diese Weise einen vorhandenen Zielkonflikt des Impulsverlustes $v_d$ unter Beibehaltung einer kompakten Baulänge für den Stoßimpulssensor 10 zu überwinden.

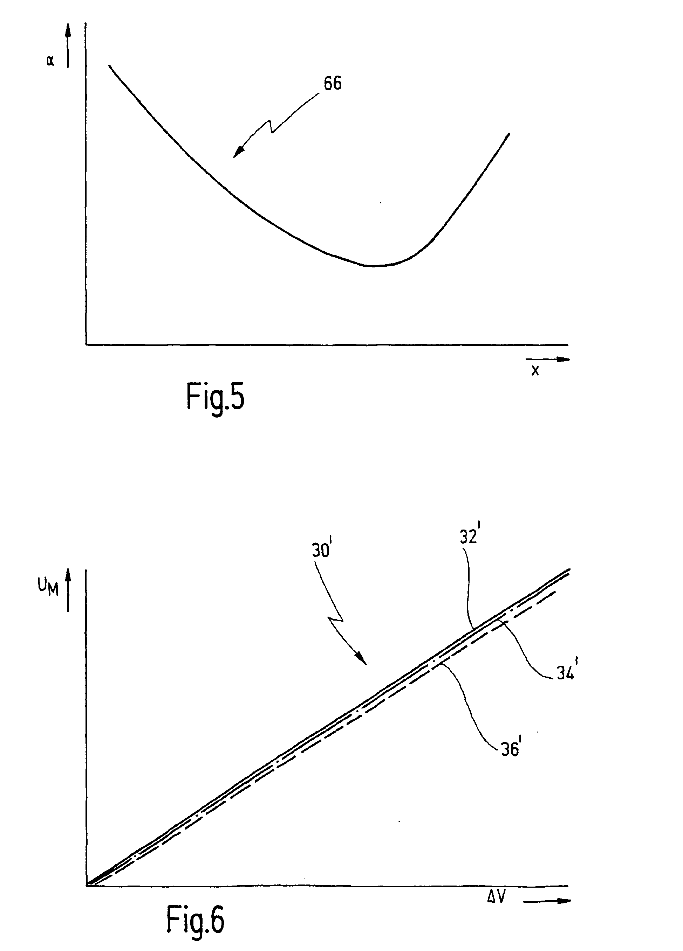

Dies wird erfindungsgemäß mit einem Stoßimpulssensor 40 erreicht, wie er in Fig. 4 dargestellt ist.

Der Stoßimpulssensor 40 umfaßt einen Dauermagneten 42, der durch ein Magnetgehäuse 44 umschlossen ist. Der Dauermagnet 42 im Magnetgehäuse 44 ist in einem rohrförmigen Sensorgehäuse 46 axial gleitend gelagert. Eine Innenwand 48 des Sensorgehäuses 46 ist zu diesem Zweck vorzugsweise zylindrisch ausgebildet.

In der Innenwand 48 ist eine Führungsnut 50 angebracht, deren Steigung in einem Punkt 51 mit $\alpha$ bezeichnet ist. Der Winkel $\alpha$ hat über die axiale Länge x einen Verlauf, wie er in Fig. 5 mit einem dritten Diagramm 66 dargestellt ist.

Am Magnetgehäuse 44 ist ein Zapfen 52 angebracht, der in der Führungsnut 50 läuft.

Fig. 4 zeigt den Dauermagneten 42 in seiner Ruheposition. An der axial gegenüberliegenden Wand 54 des Sensorgehäuses 46 ist ein Rückstellmagnet 56 umgekehrter axialer Polarisierung angebracht, der den Dauermagneten 42 in der in Fig. 4 gezeigten Ruheposition hält. Alternativ könnte ein entsprechender Magnet auch als Haftmagnet auf der in Fig. 4 linken Seite des Dauermagneten 42 zwischen dem Magnetgehäuse 44 und der linken Endwand des Sensorgehäuses 46 angeordnet sein.

Um den in Fig. 4 rechten Teil des Sensorgehäuses 46 ist eine Meßspule 58 angeordnet, an die sich axial nach links eine Testspule 60 anschließt.

Wegen der übrigen verwendeten physikalischen Größen darf der Einfachheit halber auf Fig. 1 verwiesen werden.

Wenn auf den Sensor 40 von außen in axialer Richtung eine Beschleunigung einwirkt, führt der Dauermagnet 42 im Sensorgehäuse 46 eine Translationsbewegung in Richtung x aus. Diese wird jedoch infolge der Führung des mit dem Magnetgehäuse 44 verbundenen Zapfens 52 in der näherungsweise schraubenförmigen Führungsnut 50 von einer rotatorischen Zwangsbewegung überlagert. Diese rotatorische Zwangsbewegung ist wegen des sich über dem Weg x ändernden Steigungswinkels $\alpha$ (vgl. Fig. 5) mit unterschiedlichen Drehgeschwindigkeiten behaftet. Wie man aus Fig. 5 erkennen kann, nimmt der Steigungswinkel $\alpha$ über den Weg x zunächst ab, durchläuft dann ein Minimum und steigt anschließend wieder an. Dies bedeutet, daß der Dauermagnet 42 in seiner translatorischen Bewegung zunächst abgebremst wird (abnehmender Steigungswinkel $\alpha$) und dann aus einem Minimum der Geschwindigkeit wieder beschleunigt wird.

Die vorbeschriebene Vorrichtung wirkt in zweierlei Weise. Zum einen erfährt der Dauermagnet 42 entlang des Verfahrweges x aufgrund seines Massenträgheitsmomentes J eine Verzögerung, die dafür sorgt, daß der Dauermagnet 42 während eines Kollisionsvorganges des Kraftfahrzeuges im betrachteten Meßbereich der Impulsgeschwindigkeit $\Delta v$

in gewünschter Art das rechte Ende, d.h. einen Endanschlag des Sensorgehäuses 46, nicht erreicht.

Zum anderen erfährt der Dauermagnet 42 eine zusätzliche Verzögerung bzw. eine zusätzliche Beschleunigung, jeweils abhängig von seiner Momentanposition x, mittels derer die verzögerte Momentangeschwindigkeit dx/dt des Dauermagneten 42 moduliert wird.

Die Ortsabhängigkeit des Bahnwinkels $\alpha_{(x)}$ ist nun so gestaltet, daß durch eine entsprechende Formgebung der Führungsnut 50 im Sensorgehäuse 46 die unvermeidliche Variation des magnetischen Flußintegrals $\Phi$ (vgl. Fig. 3) über die zusätzliche Modulation der Momentangeschwindigkeit dx/dt gemäß Gleichung (1) gerade kompensiert wird.

Sofern gewünscht, kann eine Rückstellkraft für den Dauermagneten 42 mittels des Rückstellmagneten 56 dargestellt werden, dies ist jedoch systematisch nicht notwendig. Wenn man davon ausgeht, daß der Stoßimpulssensor 40 nur ein einziges Mal während seiner Lebensdauer aktiv wird, nämlich dann, wenn sich ein Kollisionsschaden des Kraftfahrzeuges ereignet, ist nicht notwendig, daß der Stoßimpulssensor 40 für wiederholten Gebrauch einsatzfähig ist. Dann kann der Rückstellmagnet 56 oder alternativ ein in Fig. 4 links vom Dauermagneten 42 angeordneter Haftmagnet entfallen. Die genannten Elemente können bei dieser Betrachtungsweise allerdings insoweit nützlich sein, als sie eine definierte Ruheposition des Dauermagneten 42 auch dann gewährleisten, wenn der Stoßimpulssensor 40 im Betrieb erheblichen Erschütterungen ausgesetzt sein sollte, die noch nicht zu einem Ansprechen des Stoßimpulssensors 40 führen sollen.

Die Meßspule 58 ist vorzugsweise auf einen Spulenkörper gewickelt, der seinerseits koaxial auf das Sensorgehäuse 46 aufgeschoben ist. An Klemmen der Meßspule 58 kann die Meßspannung $U_M$ abgegriffen werden.

Um Einflüsse der Umgebungstemperatur auf die Höhe der Meßspannung $U_M$ nach Möglichkeit auszuschließen, besteht der Dauermagnet 42 und - soweit vorhanden - der Rückstellmagnet 56 aus einem temperaturunempfindlichen Magnetwerkstoff, vorzugsweise aus einer Samarium-Kobalt-Legierung, die sich durch einen extrem niedrigen Temperaturkoeffizienten der Sättigungsinduktion auszeichnet.

Neben der Meßspule 58 ist vorzugsweise die Testspule 60 vorgesehen. Mit deren Hilfe kann die Funktion des Stoßimpulssensors 40 im Wege eines Selbsttests überprüft werden.

Zu diesem Zweck wird ein elektromagnetisches Feld in der Testspule 60 erzeugt, indem eine Testspannung $U_T$ angelegt bzw. ein Teststrom eingespeist wird. Als Folge davon wird der Dauermagnet 42 aus der in Fig. 4 dargestellten Ruheposition nach rechts bewegt, bis er in den magnetischen Mittelpunkt der Testspule 60 gelangt, sich also im wesentlichen koaxial zu dieser befindet. Die Meßspannung $U_T$ wird nun abgeschaltet, und der Dauermagnet 42 kehrt unter alleiniger Einwirkung der Rückstellkraft in die Ruheposition zurück. Die in die Meßspule 58 dabei induzierte Spannung zeigt nun an, daß der Stoßimpulssensor 40 funktionsfähig ist. Da die Meßspannung $U_M$ in diesem Fall aufgrund der Rückwärtsbewegung des Dauermagneten 42 eine umgekehrte Polarität im Vergleich zu einer "echten" Meßspannung $U_M$ im Falle einer Kollision des Kraftfahrzeuges aufweist, kann das Meßsignal in diesem Testbetrieb in vorteilhafter Weise vom eigentlichen Meßsignal eindeutig unterschieden werden.

Beispielsweise kann der vorstehend beschriebene Testmodus bei jedem Anlassen des Motors oder bei jedem Betätigen des Zündschlüssels des Kraftfahrzeugs eingeleitet werden. Dadurch wird verhindert, daß der Testmodus zufällig mit einem Kollisionsereignis zeitlich zusammenfällt, so daß die Auslösung von Sicherheitseinrichtungen an Bord des Kraftfahrzeuges nicht behindert wird.

Hinsichtlich der Dimensionierung der Führungsnut 50 bzw. des Verlaufs des Steigungswinkels $\alpha$ über dem Weg x gemäß dem dritten Diagramm 66 in Fig. 5 geht man von folgender Überlegung aus:

Die weiter oben erwähnte Kompensation des magnetischen Flußintegrals (Fig. 3) über den gesamten Verfahrweg x kann aus der Bewegungsgleichung des Dauermagneten 42 ermittelt werden. Die Bewegungsgleichung folgt gemäß dem Hamilton-Prinzip aus der Bedingung dE/dt = 0, wobei E die Gesamtenergie des mechanischen Systems bezeichnet. Diese ist gegeben durch die Beziehung:

$$E = \tfrac{1}{2} m \, (dx / dt)^2 + \tfrac{1}{2} J \, (d\varphi / dt)^2 + \int F(x) dx \qquad (3)$$

Der erste Term der Gleichung (3) beschreibt die kinetische Energie des Dauermagneten 42 mit der Masse m und der Momentangeschwindigkeit dx/dt. Der zweite Term steht für die durch die Zwangsführung erzeugte Rotationsenergie des Dauermagneten 42 mit dem Massenträgheitsmoment J und der momentanen Winkelgeschwindigkeit $d\varphi/dt$. Der dritte Term steht für die potentielle Energie des Dauermagneten 42 gegen die Rückstellkraft $F_{(x)}$, sofern eine solche vorgesehen ist.

Die Führungsnut 50 im Sensorgehäuse 46 beschreibt näherungsweise eine Schraubenkurve, jedoch mit der Besonderheit, daß der Steigungswinkel $\alpha$ entlang des Verfahrweges x nicht konstant ist. Hieraus ergibt sich die Zwangsbedingung in differenzieller Form:

$$dx = rd\varphi \cdot \tan \alpha(x) \qquad (4)$$

wobei r der Radius der Innenwand 48 des Sensorgehäuses 46 ist. Bewegt sich der Dauermagnet 42 nun um die Wegstrecke dx, wird er um das Bogenelement $d\varphi$ um die x-Achse gedreht. Das Maß der Drehung wird durch den am Ort x wirkenden Steigungswinkel $\alpha_{(x)}$ bestimmt. Die Bewegungsgleichung des Dauermagneten 42 ergibt sich aus der Gleichung (3) unter Berücksichtigung von Gleichung (4) in der sogenannten "M-Darstellung" zu:

$$d^2x \ / \ dt^2 + \tfrac{1}{2} \frac{dM \ / \ dx}{M} (dx \ / \ dt)^2 + \frac{1}{M} \left[ \frac{F(x)}{m} - a_x \right] = 0 \qquad (5)$$

in Verbindung mit

$$M = 1 + J \ / \ (mr^2 \cdot \tan^2 \alpha) \qquad (6)$$

Die Größe M ist dabei die auf die Masse m des Dauermagneten 42 normierte, sogenannte effektive Masse. Diese ist implizit vom Verfahrweg x abhängig. M' ist der totale Differentialquotient von M nach x. $a_x$ ist die in x-Richtung von außen einwirkende Beschleunigung. Die Funktion $M_{(x)}$ ist nun in der Weise zu bestimmen, daß die Kompensationsbedingung:

$$\frac{dM \ / \ dx}{M} = S \quad \frac{d\Phi \ / \ dx}{\Phi} \qquad (7)$$

erfüllt ist. $d\Phi/dx$ ist dabei der Differentialquotient von $\Phi$ nach x. Er ergibt sich aus der Steigung der bekannten Funktion $\Phi_{(x)}$ gemäß Abbildung 3. Die Größe S und die Randbedingung $M_{(0)}$ sind willkürlich vorgegebene Variationsparameter, mittels derer $M_{(x)}$ aus der Bestimmungsgleichung (7) berechnet werden kann. Aus der gewonnenen Hilfsgröße $M_{(x)}$ erhält man schließlich den gesuchten Bahnwinkel $\alpha_{(x)}$ gemäß Gleichung (6), der die gewünschte Selbstkompensation des Dauermagneten 42 bewerkstelligt. Der differenzielle Lösungsansatz (7) liefert in überraschender Weise eine brauchbare Lösung für die Selbstkompensation unter Einbeziehung der beiden dimensionslosen Variationsparameter S und $M_{(0)}$, wenn man den Variationsparameter S zwischen 0 und 2 sowie die Randbedingung $M_{(0)}$ für die Differentialgleichung (7) zwischen 1 und 10 empirisch variiert. Dies geschieht so lange, bis eine Nachrechnung der Meßspannungsverläufe über der Impulsgeschwindigkeit von der in Fig. 2 dargestellten Ausgangssituation zu der in Fig. 6 dargestellten Endsituation führt, in der gleiche Kurven mit gleichen Bezugszeichen wie in Fig. 2 bezeichnet sind und lediglich ein Apostroph hinzugefügt wurde.

Insgesamt zeigt Fig. 5 somit den schlußendlich erhaltenen Verlauf des Steigungswinkels $\alpha$ als Funktion von x über den gesamten Verfahrweg (Kompensationskurve) des Dauermagneten 42 im Sensorgehäuse 46. Dieser Weg beträgt beispielsweise 17 mm.

Fig. 6 zeigt, wie bereits erwähnt, die resultierende Charakteristik des Stoßimpulssensors 40 mit Kompensation, die sich gemäß Gleichung (1) mittels dx/dt durch einfache Integration von Gleichung (5) ergibt. Die Meßspannung $U_M$ ist bei gleicher Impulsfläche weitestgehend unabhängig von der Dauer des Stoßimpulses und ergibt im Zusammenhang eine eindeutige Übertragungsfunktion des Stoßimpulssensors 40 im gesamten Meßbereich. Sie weist in guter Näherung sogar einen linearen Verlauf auf, was eine Signalweiterverarbeitung in einer Zentralauswerteeinheit vereinfacht.

Der erfindungsgemäße Stoßimpulssensor 40 erzeugt somit eine Meßgröße, die sich aus der Impulsgeschwindigkeit und nicht aus der Beschleunigung herleitet und damit ein direktes Maß für die Kollisionsstärke ist. Für den Stoßimpulssensor 40 ist im Prinzip keine externe Spannungsversorgung notwendig, da aufgrund des magnetisch-induktiven Funktionsprinzips am Sensorausgang eine Generatorspannung anliegt, die durch die Messung selbst erzeugt wird.

Aufgrund der beschriebenen Selbstkompensation des bewegten Dauermagneten 42 ist das Ausgangssignal neutral und eindeutig.

Auch bei Verwendung einer relativ hohen Rückstellkraft ist der Impulsverlust des Läufers wegen der relativ großen effektiven Masse m des Dauermagneten 42 vernachlässigbar.

Weiterhin ist das Ausgangssignal $U_M$, wie deutlich aus Fig. 6 zu erkennen ist, eindeutig bezüglich der Impulsgeschwindigkeit $\Delta v$, und es kann darüber hinaus auch eine fast lineare Sensorkennlinie erreicht werden.

Weiterhin ist es mit dem erfindungsgemäßen Stoßimpulssensor 40 möglich, einen Selbsttest der gesamten in Fig. 4 gezeigten Elemente, vom bewegten Dauermagneten 42 bis zum Anschlußkabel, durchzuführen.

Schließlich ergibt sich eine kompakte Baulänge des Sensorgehäuses 46.

## Patentansprüche

1. Stoßimpulssensor mit einem rohrförmigen Sensorgehäuse (14; 46) und einem Sensorelement, das unter Einwirkung eines in Axialrichtung ausgeübten, mindestens näherungsweise impulsförmigen Stoßes (32a, 34a, 36a) auf das Sensorgehäuse (14; 46) mit einer Geschwindigkeit (dx/dt) entlang eines vorbestimmten Weges (x) in Axialrichtung im Sensorgehäuse (14; 46) bewegbar ist, wobei das Sensorelement aus einem magnetischen Werkstoff besteht, wobei ferner eine Messspule (22; 58) als gehäusefestes Aufnahmeelement vorgesehen ist, und wobei das Sensorelement in der Messspule (22; 58) über seine durch den Stoß verursachte Bewegung auf magnetischem Wege eine vom Weg (x) abhängige Messspannung ($U_1$; $U_M$) erzeugt, **dadurch gekennzeichnet, dass** das Sensorelement in dem Sensorgehäuse (14; 46) entlang einer Innenwand (48) geführt ist, dass in der Innenwand (48) eine Führungsnut (50) angebracht ist, dass das Sensorelement mit einem in die Führungsnut (50) fassenden Zapfen (52) versehen ist, und dass die Führungsnut zum Weg (x) um einen Winkel ($\alpha$) geneigt ist, der sich entlang des Weges (x) ändert, wodurch die Geschwindigkeit (dx/dt) des Sensorelementes derart verändert wird, dass die Messspannung ($U_M$) über dem Weg (x) bei gleicher Impulsfläche unabhängig von der Zeitdauer des impulsförmigen Stoßes (32a, 34a, 36a) ist.

2. Stoßimpulssensor nach Anspruch 1, **dadurch gekennzeichnet, dass** die Innenwand (48) eine zylindrische Wand ist, und dass der Winkel ($\alpha$) aus dem Gleichungssystem:

$$M_{(x)} = 1 + J/(mr^2\tan^2\alpha) \qquad (I)$$

$$M'/M_{(x)} = S(\Phi'/\Phi_{(x)}) \qquad (II)$$

bestimmt wird, wobei die verwendeten Größen bedeuten:

$\alpha$ = Neigungswinkel der Führungsnut (50) entlang des Weges x
r = der Radius der zylindrischen Innenwand (48)
x = der Weg des Sensorelementes,
m = die Masse des Sensorelementes,
$M_{(x)}$ = die auf die Masse m normierte effektive Masse,
M' = dM/dx,
J = das Massenträgheitsmoment des Sensorelementes,
$\Phi_{(x)}$ = das magnetische Flussintegral,
$\Phi'$ = d$\Phi$/dx
S = ein erster Variationsparameter, der im Bereich zwischen 0 und 2 variiert wird,
$M_{(0)}$ = ein zweiter Variationsparameter, der im Bereich zwischen 1 und 10 variiert wird,

wobei in der Differentialgleichung (II) die Variationsparameter (S, $M_{(0)}$) empirisch in den genannten Bereichen variiert werden, bis bei einer Berechnung des bewegten Sensorelementes die Messspannung ($U_M$) über dem Weg (x) bei gleicher Impulsfläche unabhängig von der Zeitdauer des impulsförmigen Sto-ßes (32a, 34a, 36a) ist.

3. Stoßimpulssensor nach Anspruch 1 oder 2, **dadurch gekennzeichnet, dass** das Sensorelement ein Permanentmagnet (42) ist.

4. Stoßimpulssensor nach einem oder mehreren der Ansprüche 1 bis 3, **dadurch gekennzeichnet, dass** in der Bewegungsbahn des Sensorelementes ein Rückstellmagnet (56) angeordnet ist.

5. Stoßimpulssensor nach einem oder mehreren der Ansprüche 1 bis 4, **dadurch gekennzeichnet, dass** das Sensorelement in seiner Ruhestellung mittels eines Halteelementes gehalten ist und sich erst bei Überschreiten einer vorbestimmten Abreißkraft vom Halteelement löst.

6. Stoßimpulssensor nach Anspruch 5, **dadurch gekennzeichnet, dass** das Halteelement als weichmagnetische Platte ausgebildet ist, die das Sensorelement über einen vorbestimmten magnetischen Luftspalt in seiner Ruheposition mit einer definierten Rückhaltekraft festhält.

7. Stoßimpulssensor nach einem oder mehreren der Ansprüche 1 bis 6, **dadurch gekennzeichnet, dass** in der Bewegungsbahn des Sensorelementes zwischen einer Ruhestellung und dem Aufnahmeelement ein Test-Aumahmeelement angeordnet ist.

8. Stoßimpulssensor nach Anspruch 7, **dadurch gekennzeichnet, dass** das Test-Aufnahmeelement eine Testspule (60) ist.

**Claims**

1. An impact-induced pulse sensor comprising a tubular sensor housing (14; 46) and a sensor element which, under the influence of an essentially pulse-shaped impact (32a, 34a, 36a) on the sensor housing (14; 46), is adapted to be moved with a velocity (dx/dt) along a predetermined path (x) in an axial direction of the sensor housing (14; 46), wherein the sensor element consists of a magnetic material, wherein, further, a measuring coil (22; 58) is provided as a receiving element rigidly connected to the housing, and wherein the sensor element, through its movement caused by the impact, magnetically generates within the measuring coil (22; 58) a measuring voltage ($U_1$; $U_M$) depending on the position on the path (x), **characterized in that** the sensor element is guided within the sensor housing (14; 46) along an inner wall (48), that a guiding groove (50) is provided within the inner wall (48), that the sensor element is provided with a pin (52) engaging the guiding groove (50), and that the guiding groove (50) is inclined relative to the path (x) by an angle ($\alpha$) that varies along the path (x), whereby the velocity (dx/dt) of the sensor element is modified such that the measuring voltage ($U_M$) vs. the path (x) is independent from the duration of the pulse-shaped impact (32a, 34a, 36a) for like pulse areas.

2. The impact-induced sensor of claim 1, **characterized in that** the inner wall (48) is a cylindrical wall and the angle ($\alpha$) is derived from the following equations:

$$M_{(x)} = 1 + J/(mr^2\tan^2\alpha) \qquad (I)$$

$$M'/M_{(x)} = S(\phi'/\phi_{(x)}) \qquad (II)$$

where

$\alpha$ = angle of inclination of the guiding groove (50) along the path (x)
r = radius of the cylindrical inner wall (48)
x = position on the path of the sensor element
m = mass of the sensor element
$M_{(x)}$ = effective mass, normalized on the mass m
M' = dM/dx
J = mass moment of inertia of the sensor element
$\phi_{(x)}$ = magnetic flux integral

$\phi' = d\phi/dx$

S = a first parameter of variation, varied in a range of between 0 and 2

$M_{(0)}$ = a second parameter of variation, varied in a range of between 1 and 10

wherein in the above differential equation (II) the parameters of variation (S, $M_{(0)}$) are varied empirically within the mentioned ranges, until in a calculation of the displaced sensor element the measuring voltage ($U_M$) vs. position on the path (x) is independent of the duration of the pulse-shaped impact (32a, 34a, 36a) for like pulse areas.

3. The impact-induced sensor of claim 1 or 2, **characterized in that** the sensor element is a permanent magnet (42).

4. The impact-induced sensor of one or more of claims 1 to 3, **characterized in that** a return magnet (56) is provided within the trajectory of the sensor element.

5. The impact-induced sensor of one or more of claims 1 to 4, **characterized in that** the sensor element, when being in an initial position, is retained by means of a holding element, and gets loose from the holding element only if a predetermined detaching force is exceeded.

6. The impact-induced sensor of claim 5, **characterized in that** the holding element is configured as a soft magnetic plate holding the sensor element in its initial position across a predetermined magnetic air gap with a predetermined retention force.

7. The impact-induced sensor of one or more of claims 1 to 6, **characterized in that** a test pickup element is arranged within the trajectory of the sensor element between an initial position and the pickup means.

8. The impact-induced sensor of claim 7, **characterized in that** the test pickup element is a test pickup coil (60).

**Revendications**

1. Capteur d'impulsions de choc avec un boîtier de capteur (14 ; 46) de forme tubulaire et un élément de détection qui, sous l'action d'un choc (32a, 34a, 36a), au moins approximativement en forme d'impulsion, exercé dans la direction axiale, est déplaçable dans la direction axiale, dans le boîtier de capteur (14 ; 46) à une vitesse (dx/dt) le long d'une course (x) prédéterminée, l'élément de détection étant constitué d'un matériau magnétique, une bobine de mesure (22 ; 58) étant en outre prévue en tant qu'élément de réception solidaire du boîtier, et l'élément de détection produisant dans la bobine de mesure (22 ; 58), de façon magnétique, du fait du déplacement provoqué par le choc, une tension de mesure ($U_i$ ; $U_M$) dépendant de la course (x), **caractérisé en ce que** l'élément de détection est guidé dans le boîtier de capteur (14 ; 46) le long d'une paroi intérieure (48), **en ce que** dans la paroi intérieure (48) est pratiquée une rainure de guidage (50), **en ce que** l'élément de détection est pourvu d'un ergot (52) s'engageant dans la rainure de guidage (50), et **en ce que** la rainure de guidage est inclinée par rapport à la course (x) d'un angle ($\alpha$) qui varie le long de la course (x), ce qui fait que la vitesse (dx/dt) de l'élément de détection est modifiée de façon que la tension de mesure ($U_M$) soit indépendante sur la course (x), pour une même surface d'impulsion, de la durée du choc (32a, 34a, 36a) en forme d'impulsion.

2. Capteur d'impulsions de choc selon la revendication 1, **caractérisé en ce que** la paroi intérieure (48) est une paroi cylindrique, et **en ce que** l'angle ($\alpha$) est déterminé à partir du système d'équations :

$$M_{(x)} = 1 + J/(mr^2 \tan^2\alpha) \qquad\qquad (I)$$

$$M'/M_{(x)} = S(\Phi'/\Phi_{(x)}) \qquad\qquad (II),$$

les grandeurs utilisées ayant la signification suivante:

$\alpha$ = angle d'inclinaison de la rainure de guidage (50) le long de la course x

r = rayon de la paroi intérieure cylindrique (48)

x = course de l'élément de détection,

m = masse de l'élément de détection,

$M_{(x)}$ = masse effective normalisée sur la masse m,

$M' = dM/dx$,

J = moment d'inertie de masse de l'élément de détection,

$\Phi_{(x)}$ = intégrale de flux magnétique,

$\Phi' = d\Phi/dx$

S = premier paramètre de variation qui est modifié entre 0 et 2,

$M_{(0)}$ = deuxième paramètre de variation qui est modifié entre 1 et 10,

dans l'équation différentielle (II), les paramètres de variation ($S, M_{(0)}$) étant modifiés de manière empirique dans les domaines cités, jusqu'à ce que pour un calcul de l'élément de détection déplacé, la tension de mesure ($U_M$) sur la course (x) soit indépendante, pour une même surface d'impulsion, de la durée du choc (32a, 34a, 36a) en forme d'impulsion.

3. Capteur d'impulsions de choc selon la revendication 1 ou 2, **caractérisé en ce que** l'élément de détection est un aimant permanent (42).

4. Capteur d'impulsions de choc selon une ou plusieurs des revendications 1 à 3, **caractérisé en ce que** dans la course de déplacement de l'élément de capteur est disposé un aimant de rappel (56).

5. Capteur d'impulsions de choc selon une ou plusieurs des revendications 1 à 4, **caractérisé en ce que** l'élément de détection est maintenu dans sa position de repos au moyen d'un élément de retenue et se sépare de l'élément de retenue seulement lorsqu'est dépassée une force d'arrachage prédéterminée.

6. Capteur d'impulsions de choc selon la revendication 5, **caractérisé en ce que** l'élément de retenue est réalisé sous la forme d'une plaque magnétique douce (12) qui fixe l'élément de détection dans sa position de repos, sur un entrefer magnétique prédéterminé, au moyen d'une force de rappel définie.

7. Capteur d'impulsions de choc selon une ou plusieurs des revendications 1 à 6, **caractérisé en ce que** dans la course de déplacement de l'élément de détection un élément de réception test est disposé entre une position de repos et l'élément de réception.

8. Capteur d'impulsions de choc selon la revendication 7, **caractérisé en ce que** l'élément de réception test est une bobine test (60).

## Fig.1

Fig.1

## Fig.2

Fig.2

**Fig.3**

**Fig.4**

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4128347 C1